# EUROPEAN PATENT APPLICATION

(11) **EP 4 851 866 A1**
(43) Date of publication of application: **09.12.2026**
(21) Application number: 24926681.8
(22) Date of filing: 30.08.2024
(51) Int. Cl.: G06N 3/084

(54) **MODEL TRAINING METHOD AND APPARATUS, SYSTEM, AND RELATED DEVICE**

(30) Priority: 28.02.2024 CN 202410223899
(71) Applicant: HUAWEI TECHNOLOGIES CO., LTD., Shenzhen, Guangdong 518129 (CN)
(72) Inventor: ZHONG, Baoquan, Shenzhen, Guangdong 518129 (CN); ZHANG, Mengyang, Shenzhen, Guangdong 518129 (CN); LI, Bingcong, Shenzhen, Guangdong 518129 (CN)
(74) Representative: Huawei European IPR
(86) International application number: PCT/CN2024/115802
(87) International publication number: WO 2025/179814

(57) **Abstract**

A model training method and apparatus, a system, and a related device are provided, relating to the field of artificial intelligence technologies. A distributed training system includes a plurality of compute nodes, configured to perform distributed training on an AI (artificial intelligence) model. During a forward computation process, data is transmitted among the plurality of compute nodes by executing a forward communication operator in the AI model. A compute node in the distributed training system obtains a recomputation layer of the AI model during a backward computation process, and obtains a forward communication operator in the recomputation layer. Then, the compute node removes the forward communication operator from the recomputation layer, and performs backward computation on the recomputation layer from which the forward communication operator has been removed. In this way, in a backward computation phase, by performing recomputation on the computation layer from which the forward communication operator has been removed, the compute node can obtain an activation value needed for updating a parameter in the computation layer, without executing the forward communication operator, thereby improving overall efficiency of distributed training on the AI model.

## Description

This application claims priority to Chinese Patent Application No. 202410223899.7, filed with the China National Intellectual Property Administration on February 28, 2024 and entitled "MODEL TRAINING METHOD, APPARATUS, SYSTEM, AND RELATED DEVICE", which is incorporated herein by reference in its entirety.

### TECHNICAL FIELD

This application relates to the field of artificial intelligence technologies, and in particular, to a model training method and apparatus, a system, and a related device.

### BACKGROUND

With the development of artificial intelligence (Artificial Intelligence, AI) technologies, the parameter scale of an AI model has been steadily increasing. Therefore, a plurality of compute nodes are usually used to perform distributed training on the AI model, to improve efficiency for the AI model and reduce computational power requirements on a single compute node. One round of model training usually includes a forward computation phase and a backward computation phase. The forward computation phase is a process of sequentially performing computation from the 1^{st} computation layer to the last computation layer in the AI model (that is, an inference phase). The backward computation phase is a process of sequentially performing model parameter updates from the last computation layer to the 1^{st} computation layer.

In practical applications, a single compute node has limited storage resources, and it may be difficult for the compute node to store all activation values generated in the forward computation phase during model training. Usually, in the forward computation phase, the compute node may not store any activation values generated by the computation layer in the AI model, or store only activation values generated by some computation layers, to reduce consumption of storage resources. Correspondingly, in the backward computation phase, the compute node may recompute the computation layer (that is, perform recomputation), to obtain an activation value generated by the computation layer in the forward phase, so that the compute node updates parameters in the computation layer based on the activation value.

However, this AI model training approach usually leads to low model training efficiency.

### SUMMARY

This application provides a model training method, to improve overall efficiency of performing distributed training on an AI model. In addition, this application further provides a model training apparatus, a system, a compute device, a computer-readable storage medium, and a computer program product.

According to a first aspect, this application provides a model training method. The method is applied to a distributed training system. The distributed training system includes a plurality of compute nodes. The plurality of compute nodes are configured to perform distributed training on an AI (artificial intelligence) model. The AI model includes a forward communication operator. In addition, during a forward computation process, data is transmitted among the plurality of compute nodes by executing the forward communication operator, and the transmitted data may be data obtained based on an activation value through computation on a network layer in each compute node, or the like. Specifically, the compute node in the distributed training system obtains a recomputation layer of the AI model during a backward computation process. The recomputation layer may be, for example, a computation layer that does not store an activation value in the forward computation process and on which parameter update needs to be performed based on the activation value in the backward computation process. In addition, the compute node obtains a forward communication operator in the recomputation layer. Then, the compute node removes the forward communication operator from the recomputation layer, and performs backward computation on the recomputation layer from which the forward communication operator has been removed.

In this way, in a backward computation phase, by performing recomputation on the computation layer from which the forward communication operator has been removed, the compute node can obtain the activation value needed for updating the parameter in the computation layer, without executing the forward communication operator in the computation layer (namely, the recomputation layer). This can avoid communication latency generated when the compute node executes an unnecessary forward communication operator, affecting model parameter update efficiency, so that overall efficiency of performing distributed training on the AI model can be improved.

In a possible implementation, the removed forward communication operator is an end forward communication operator in the recomputation layer, and the end forward communication operator is located at an end of the recomputation layer. In this way, when the recomputation layer is executed after the forward communication operator is removed from the recomputation layer, a needed activation value can be obtained, and execution of an unnecessary forward communication operator can be avoided, so that training efficiency of the AI model can be improved.

In a possible implementation, the removed forward communication operator refers to all forward communication operators in the recomputation layer. To be specific, when the recomputation layer includes a plurality of forward communication operators, all the forward communication operators in the recomputation layer may be removed. In this way, during the backward computation process, the end forward communication operator does not need to be executed, and another forward communication operator at a non-end location does not need to be executed, either, so that training efficiency of the AI model can be further improved.

In a possible implementation, the recomputation layer includes a plurality of forward communication operators. In this case, when removing the forward communication operator from the recomputation layer, the compute node may specifically divide the recomputation layer into a plurality of sub-recomputation layers, where each of the plurality of sub-recomputation layers includes one forward communication operator. Usually, for a sub-recomputation layer obtained through division, a forward communication operator is located at an end of the sub-recomputation layer. Then, the compute node removes the forward communication operator included in each of the plurality of sub-recomputation layers. When performing backward computation on the recomputation layer from which the forward communication operator has been removed, the compute node may specifically perform backward computation on each of the plurality of sub-recomputation layers from which the forward communication operator has been removed. In this way, all the forward communication operators in the recomputation layer can be removed by dividing the recomputation layer including the plurality of forward communication operators into the plurality of sub-recomputation layers and sequentially removing the forward communication operator from each sub-recomputation layer. In this way, none of the forward communication operators in the recomputation layer needs to be executed during the backward computation process, so that training efficiency of the AI model can be effectively improved.

In a possible implementation, when dividing the recomputation layer into the plurality of sub-recomputation layers in the backward computation phase, in a forward computation phase, the compute node stores input data of each of the plurality of sub-recomputation layers, where the stored input data is used to perform backward computation on the sub-recomputation layer. In this way, in the backward computation phase, the compute node can perform recomputation on each sub-recomputation layer by using the stored input data, to obtain an activation value generated by the sub-recomputation layer and avoid model training interruption caused by a recomputation failure.

In a possible implementation, for the plurality of compute nodes in the distributed training system, an example in which a first compute node in the plurality of compute nodes performs backward computation on the recomputation layer from which the forward communication operator has been removed is used. Before dividing the computation layer into the plurality of sub-recomputation layers, the first compute node may further estimate whether a quantity of storage resources of the first compute node meets a recomputation layer division condition, where the recomputation layer division condition may be, for example, whether the quantity of storage resources of the first compute node can be greater than a threshold. In this way, when dividing the recomputation layer into the plurality of sub-recomputation layers, the first compute node may specifically divide the recomputation layer into the plurality of sub-recomputation layers only when the quantity of storage resources of the first compute node meets the recomputation layer division condition. In this way, the first compute node may determine, based on the quantity of storage resources of the first compute node, whether to divide the recomputation layer including the plurality of forward communication operators, to avoid a case in which a quantity of storage resources exceeds the quantity of storage resources of the first compute node after the recomputation layer is divided, affecting training of the AI model by the first compute node.

In a possible implementation, before performing backward computation on the recomputation layer from which the forward communication operator has been removed, the compute node may first determine, based on a mapping relationship and the removed forward communication operator, a backward communication operator corresponding to the forward communication operator. In this way, during the backward computation process, the compute node executes the recomputation layer from which the forward communication operator has been removed, to obtain an activation value, and executes the backward communication operator to obtain a gradient used to update a parameter in the recomputation layer. In this way, the compute node may update the parameter in the recomputation layer based on the activation value and the gradient, in other words, update the parameter in a computation layer corresponding to the recomputation layer. In this way, after the forward communication operator is removed, the backward communication operator may be inserted to ensure that the compute node can normally obtain the gradient, to successfully update the parameter in the computation layer.

In a possible implementation, the compute node executes the backward communication operator during execution of the recomputation layer from which the forward communication operator has been removed. In this way, a process of executing the backward communication operator may be hidden in the process of executing the recomputation layer by the compute node. In this way, after obtaining the activation value through recomputation, the compute node can directly obtain a gradient obtained based on the activation value and by executing the backward communication operator, and obtain, through computation, the gradient used to update the parameter in the recomputation layer, without waiting for the process of executing the backward communication operator by the compute node, so that training efficiency of the AI model can be improved.

In a possible implementation, the determined recomputation layer includes a compute module, the forward communication operator, and a post-processing module, where an execution order of the forward communication operator in the recomputation layer is after an execution order of the compute module and before an execution order of the post-processing module. Therefore, during the backward computation process, after removing the forward communication operator from the recomputation layer, when a first matrix dimension of output data of the compute module does not match a second matrix dimension of input data of the post-processing module, the compute node may further pad the output data of the compute module based on the second matrix dimension. In this way, padding the output data of the compute module can avoid a case in which a matrix dimension of an activation value output by the compute module does not match a matrix dimension of the input data of the post-processing module, resulting in model training interruption. This ensures that training of the AI model can be normally performed after the forward communication operator is removed.

According to a second aspect, this application provides a model training apparatus. The model training apparatus is used in a distributed training system. The distributed training system includes a plurality of compute nodes. The plurality of compute nodes are configured to perform distributed training on an artificial intelligence AI model. The AI model includes a forward communication operator. During a forward computation process, data is transmitted among the plurality of compute nodes by executing the forward communication operator. The model training apparatus includes: an obtaining unit, configured to: obtain a recomputation layer of the AI model during a backward computation process, and obtain a forward communication operator in the recomputation layer; a removing unit, configured to remove the forward communication operator from the recomputation layer; and a backward compute unit, configured to perform backward computation on the recomputation layer from which the forward communication operator has been removed.

In a possible implementation, the forward communication operator is an end forward communication operator in the recomputation layer.

In a possible implementation, the forward communication operator refers to all forward communication operators in the recomputation layer.

In a possible implementation, the recomputation layer includes a plurality of forward communication operators. The removing unit is specifically configured to: divide the recomputation layer into a plurality of sub-recomputation layers, where each of the plurality of sub-recomputation layers includes one forward communication operator; and remove the forward communication operator included in each of the plurality of sub-recomputation layers. The backward compute unit is specifically configured to perform backward computation on each of the plurality of sub-recomputation layers from which the forward communication operator has been removed.

In a possible implementation, the model training apparatus further includes: a storage unit, configured to store input data of each of the plurality of sub-recomputation layers during the forward computation process, where the input data is used to perform backward computation on the sub-recomputation layer.

In a possible implementation, the model training apparatus is used in a first compute node in the plurality of compute nodes, and the first compute node performs backward computation on the recomputation layer from which the forward communication operator has been removed. The model training apparatus further includes: an estimation unit, configured to estimate, before the recomputation layer is divided into the plurality of sub-recomputation layers, whether a quantity of storage resources of the first compute node meets a recomputation layer division condition. When dividing the recomputation layer into the plurality of sub-recomputation layers, the removing unit is specifically configured to divide the recomputation layer into the plurality of sub-recomputation layers when the quantity of storage resources of the first compute node meets the recomputation layer division condition.

In a possible implementation, the model training apparatus further includes: a determining unit, configured to determine, based on a mapping relationship and the forward communication operator, a backward communication operator corresponding to the forward communication operator. The backward compute unit is specifically configured to: execute the recomputation layer from which the forward communication operator has been removed, to obtain an activation value; execute the backward communication operator to obtain a gradient used to update a parameter in the recomputation layer; and update the parameter in the recomputation layer based on the activation value and the gradient.

In a possible implementation, the backward compute unit is specifically configured to execute the backward communication operator during execution of the recomputation layer from which the forward communication operator has been removed.

In a possible implementation, the recomputation layer includes a compute module, the forward communication operator, and a post-processing module, where an execution order of the forward communication operator in the recomputation layer is after an execution order of the compute module and before an execution order of the post-processing module. The model training apparatus further includes: a padding unit, configured to: when a first matrix dimension of output data of the compute module does not match a second matrix dimension of input data of the post-processing module, pad the output data of the compute module based on the second matrix dimension.

According to a third aspect, this application provides a distributed training system. The distributed training system includes a plurality of compute nodes. The plurality of compute nodes are configured to perform distributed training on an artificial intelligence AI model. The AI model includes a forward communication operator. During a forward computation process, data is transmitted among the plurality of compute nodes by executing the forward communication operator. Each of the plurality of compute nodes is configured to perform the model training method according to any one of the first aspect or the implementations of the first aspect.

According to a fourth aspect, this application provides a compute device. The compute device includes a processor and a memory. The processor and the memory communicate with each other. The processor is configured to execute instructions stored in the memory, so that the compute device performs the model training method according to any one of the first aspect or the implementations of the first aspect. It should be noted that the memory may be integrated into the processor, or may be independent of the processor. The compute device may further include a bus. The processor is connected to the memory through the bus. The memory may include a readable memory and a random access memory.

According to a fifth aspect, this application provides a computer-readable storage medium. The computer-readable storage medium stores instructions. When the instructions are run on a compute device, the compute device is caused to perform an operation step of the model training method according to any one of the first aspect or the implementations of the first aspect.

According to a sixth aspect, this application provides a computer program product including instructions. When the computer program product runs on a compute device, the compute device is caused to perform an operation step of the model training method according to any one of the first aspect or the implementations of the first aspect.

Based on the implementations provided in the foregoing aspects, this application may further combine the implementations to provide more implementations.

### BRIEF DESCRIPTION OF DRAWINGS

FIG. 1 is a diagram of a structure of an example distributed training system according to this application;
FIG. 2 is a schematic flowchart of a model training method according to this application;
FIG. 3 is a diagram in which a forward communication operator is located between a compute module and a post-processing module;
FIG. 4 is a diagram in which a computation layer includes a plurality of compute modules and a plurality of forward communication operators;
FIG. 5 is a schematic flowchart of another model training method according to this application;
FIG. 6 is a diagram of dividing a computation layer into a plurality of sub-computation layers according to this application;
FIG. 7A and FIG. 7B are a schematic flowchart of still another model training method according to this application;
FIG. 8 is a diagram of sequentially performing recomputation and executing backward communication operators by a compute node 101 according to this application;
FIG. 9 is a diagram of performing a recomputation process and executing backward communication operators in parallel by a compute node 101 according to this application;
FIG. 10 is a diagram of a structure of a model training apparatus according to this application; and
FIG. 11 is a diagram of a hardware structure of a compute device according to this application.

### DESCRIPTION OF EMBODIMENTS

In the specification, claims, and accompanying drawings of this application, terms such as "first" and "second" are intended to distinguish between similar objects but do not necessarily indicate a specific order or sequence. It should be understood that the terms used in such a manner are interchangeable in proper circumstances, and this is merely a distinguishing manner used when objects with a same attribute are described in embodiments of this application.

The following describes technical solutions in this application with reference to the accompanying drawings provided in this application.

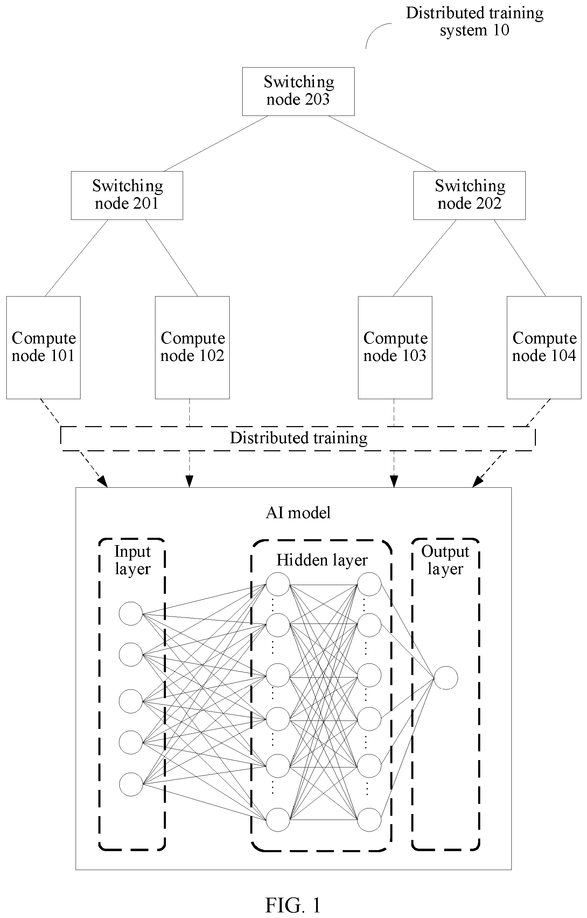

FIG. 1 is a diagram of a structure of an example distributed training system 10. As shown in FIG. 1, the distributed training system 10 may include a plurality of compute nodes and at least one switching node, and the plurality of compute nodes may communicate with each other via the at least one switching node. For ease of understanding, in FIG. 1, an example in which four compute nodes (a compute node 101 to a compute node 104) and three switching nodes (a switching node 201 to a switching node 203) are included is used for description.

The compute node may be a node having a model training capability. For example, the compute node may be an accelerator card. The accelerator card may be, for example, a deep learning processing unit (deep learning processing unit, DPU), a data processing unit (Data processing unit, DPU), a graphics processing unit (graphics processing unit, GPU), a neural network processing unit (neural network processing unit, NPU), or a tensor processing unit (tensor processing unit, TPU), or may be another type of accelerator card. Alternatively, the compute node may be a general-purpose processor, for example, a central processing unit (central processing unit, CPU). Alternatively, the compute node may be a compute device including a CPU and an accelerator card. A specific implementation of the compute node is not limited in this application.

In addition, each compute node is configured with a memory. The memory may be, for example, a high bandwidth memory (high bandwidth memory, HBM), or a dynamic random access memory (DRAM), or may be another type of memory. This is not limited herein.

The switching node may be a node having a data forwarding capability, for example, may be a switch or a router.

In the distributed training system 10 shown in FIG. 1, the compute node 101 and the compute node 104 may be used to perform distributed training on an AI model. For example, the AI model may be, for example, a large language model meta AI (large language model meta AI, LLaMA) model, a bidirectional encoder representations from transformers (bidirectional encoder representations from transformers, BERT) model, or a generative pre-trained transformer (generative pre-trained transformer 3, GPT-3) model, or may be another type of model, for example, a GPT-4. This is not limited herein. Usually, the AI model may include a plurality of computation layers. For example, the AI model includes N computation layers, which are respectively a computation layer 1 to a computation layer N, where N is a positive integer greater than 1. Output data of a current computation layer may be used as input data of a next computation layer, and output data of a last computation layer may be output data of the AI model. For example, output data of the computation layer 1 is input data of the computation layer 2, and output data of the computation layer N is the output data (an inference result) of the AI model.

In practical applications, the distributed training system 10 may perform distributed training on the AI model in a manner like tensor parallelism or sequence parallelism.

Tensor parallelism refers to dividing a matrix corresponding to a tensor (tensor) in a computation layer into a plurality of different submatrixes, where the different submatrixes are deployed on different compute nodes for computation. In addition, during model training, the plurality of compute nodes may perform collective communication, to obtain and combine computation results of the compute nodes for the submatrixes. In this way, computation on a next computation layer continues to be performed based on a combined computation result.

Sequence parallelism refers to dividing, into a plurality of subsequences, a sequence input into the AI model, where computation is performed on different subsequences by using the AI model on different compute nodes. In addition, during model training, the plurality of compute nodes may perform collective communication, to obtain and combine computation results of the compute nodes for the subsequences. In this way, computation on a next computation layer continues to be performed based on a combined computation result.

During one round of training of the AI model, each compute node may first perform a forward computation process of the AI model. Specifically, the compute node 101 is used as an example. The compute node 101 may input a training sample into the AI model as input data. Computation on the computation layer 1 (namely, a 1^{st} computation layer) in the AI model may be performed based on the input data. Specifically, an activation function (activation function) in the computation layer 1 is used to perform computation on the input data, to obtain an activation value. The generated activation value is used for further computation, to obtain intermediate data of the computation layer 1, or the activation value may be used as intermediate data of the computation layer 1. For example, the activation function may be, for example, a Sigmoid function or a rectified linear unit (rectified linear unit, ReLU), or may be another type of activation function. Then, the compute node 101 executes a communication operator (referred to as a forward communication operator below) in the computation layer 1, and separately exchanges, with the compute node 102 to the compute node 104 via the switching nodes, intermediate data (intermediate data of the 1^{st} computation layer) respectively obtained through computation. In this way, the compute node 101 may perform processing (for example, data aggregation or concatenation) on the intermediate data respectively generated by the four compute nodes, and use an obtained processing result as the output data of the computation layer 1.

Then, the compute node 101 may use the output data of the computation layer 1 as the input data of the computation layer 2 (a 2^{nd} computation layer), and perform computation on the input data by using an activation function in the computation layer 2, to obtain an activation value generated by the computation layer 2. The activation value is used for further computation, to obtain intermediate data of the computation layer 2, or the activation value may be used as intermediate data of the computation layer 2. Then, the compute node 101 may execute a forward communication operator in the computation layer 2, and separately exchanges, with the compute node 102 to the compute node 104, intermediate data (intermediate data generated by the 2^{nd} computation layer) respectively obtained through computation. In this way, the compute node 101 may perform processing on the intermediate data respectively generated by the four compute nodes, and use an obtained processing result as output data of the computation layer 2.

The rest can be deduced by analogy until computation on the computation layer N (the last computation layer) in the AI model ends. In this case, a forward computation phase ends, and the output data of the computation layer N is an inference result obtained by performing the forward computation process. Usually, the compute node 101 has limited storage resources. For example, the compute node 101 has small memory space. Therefore, in the forward computation phase, the compute node 101 may store only output data of each computation layer (in a memory), or the compute node 101 stores output data of each computation layer and activation values generated by some computation layers.

After completing the forward computation process, the compute node 101 (and another compute node) may continue to perform a backward computation process. Specifically, the compute node 101 may obtain a difference by comparing the inference result obtained by performing the forward computation process and a label (an actual result) in the training sample. For the computation layer N in the AI model, if an activation value generated by the computation layer N is not stored in the forward computation phase, the compute node 101 re-performs computation on output data of a previous computation layer (namely, the computation layer N-1) by using an activation function in the computation layer N, to obtain the activation value (that is, obtain the activation value through recomputation). In this way, the compute node 101 may update a parameter in the computation layer N (specifically, update a value of the parameter in the computation layer N) based on the activation value obtained through recomputation and the difference between the inference result and the label. During specific implementation, the compute node 101 may first obtain a gradient through computation based on the activation value and the difference. The gradient can indicate a change of the value of the parameter in the computation layer N in a specific direction, so that the compute node 101 can update the parameter in the computation layer N based on the gradient.

After completing parameter update on the computation layer N, the compute node 101 may continue to obtain, through computation based on an activation value of the computation layer N-1 and the gradient corresponding to the computation layer N, a gradient corresponding to the computation layer N-1, to update a parameter in the computation layer N-1 based on the gradient corresponding to the computation layer N-1. If the activation value generated by the computation layer N-1 is stored in the forward computation phase, the compute node 101 may directly obtain, through computation based on the stored activation value and the gradient corresponding to the computation layer N, the gradient corresponding to the computation layer N-1, to update the parameter in the computation layer N-1 based on the gradient. If the compute node 101 does not store, in the forward computation phase, the activation value generated by the computation layer N-1, the compute node 101 may re-perform computation on output data of the computation layer N-2 by using an activation function in the computation layer N-1, to obtain the activation value, so that the compute node 101 obtains, through computation based on the activation value obtained through recomputation and the gradient corresponding to the computation layer N obtained through computation, the gradient corresponding to the computation layer N-1, to update the parameter in the computation layer N-1 based on the gradient.

The rest can be deduced by analogy until parameter update on the computation layer 1 in the AI model is completed. In this case, a backward computation phase ends, and one round of training of the AI model is completed. During actual training, the compute node 101 (and another compute node) may perform a plurality of rounds of iterative training on the AI model with reference to the foregoing manner until the AI model meets a model training termination condition. For example, a quantity of times of iterative training reaches a preset quantity of times, or the AI model converges.

However, in an actual application scenario, the compute node 101 performs recomputation by using a computation layer as a granularity, to be specific, the compute node 101 not only re-executes an activation function in the computation layer, but also continues to execute a forward communication operator in the computation layer after obtaining an activation value. As a result, the compute node 101 performs an unnecessary communication process with another compute node. In this case, latency of communication between the compute node 101 and the another compute node reduces efficiency of performing parameter update on the computation layer by the compute node 101, affecting overall efficiency of performing distributed training on the AI model.

In view of this, in the distributed training system 10 shown in FIG. 1, the compute node 101 may improve the overall efficiency of the distributed training by optimizing the forward communication operator.

Specifically, in the backward computation phase, the compute node 101 may obtain a recomputation layer of the AI model during the backward computation process, and obtain a forward communication operator in the recomputation layer. Then, the compute node 101 removes the forward communication operator from the recomputation layer, and performs backward computation on the recomputation layer from which the forward communication operator has been removed. In this way, in the backward computation phase, after performing recomputation on the recomputation layer to obtain an activation value, the compute node 101 does not need to execute the removed forward communication operator. Then, the compute node 101 performs parameter update on the original computation layer (namely, the computation layer from which the forward communication operator has not been removed) based on the activation value obtained through recomputation. For ease of understanding, the following uses an example in which the compute node 101 updates the parameter in the computation layer N for description.

Assuming that in the forward computation phase, the compute node 101 does not store the activation value generated by the computation layer N, in the backward computation phase, the compute node 101 may determine the computation layer N as a recomputation layer, and obtain a forward communication operator in the recomputation layer. Then, the compute node 101 may first remove the forward communication operator from the recomputation layer, to obtain a target computation layer N (namely, a computation layer N from which the forward communication operator has been removed). Then, the compute node 101 may perform recomputation on the target computation layer N, to obtain an activation value generated by using an activation function in the target computation layer N. Because the target computation layer N does not include the removed forward communication operator, when performing recomputation on the target computation layer N, the compute node 101 does not execute the forward communication operator. Finally, the compute node 101 may obtain, through computation based on the activation value obtained through recomputation, the gradient corresponding to the computation layer N, and update, based on the gradient, the parameter in the original computation layer N in the AI model. In other words, the target computation layer N is only used to obtain the activation value through recomputation. During a parameter update process, the compute node 101 still performs parameter update on the computation layer N including the forward communication operator.

Similarly, recomputation may also be performed on another computation layer in the AI model with reference to the foregoing manner, to obtain an activation value and update a parameter in the computation layer.

In this way, in the backward computation phase, by performing recomputation on the computation layer from which the forward communication operator has been removed, the compute node 101 can obtain the activation value needed for updating the parameter in the computation layer, without executing the forward communication operator in the computation layer (namely, the recomputation layer determined based on the computation layer). This can avoid communication latency generated when the compute node 101 executes an unnecessary forward communication operator, affecting model parameter update efficiency, so that the overall efficiency of performing distributed training on the AI model can be improved.

It should be noted that the distributed training system 10 shown in FIG. 1 is merely used as an example for description, and is not used for limitation. For example, in an actual application scenario, the distributed training system 10 may include more compute nodes and switching nodes, or the distributed training system 10 may further include another node, for example, may further include a scheduling node, configured to indicate the compute node 101 to the compute node 104 to start, pause, or end a distributed training process. In addition, the distributed training system 10 may support providing one or more distributed training frameworks for the AI model, for example, a PyTorch framework and a Megatron framework. This is not limited herein.

For ease of understanding, the following describes embodiments of a model training method provided in this application with reference to the accompanying drawings.

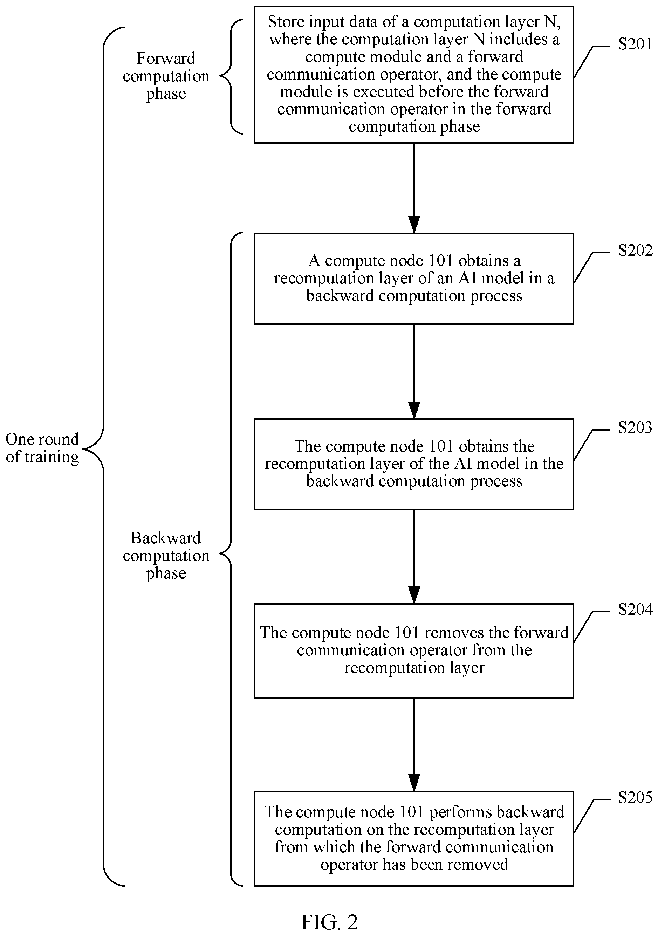

FIG. 2 is a schematic flowchart of a model training method according to an embodiment of this application. The method may be applied to the distributed training system 10 shown in FIG. 1, or may be applied to another applicable distributed training system. For ease of description, in this embodiment, that the method is applied to the distributed training system 10 shown in FIG. 1 and a process in which a compute node 101 updates a parameter in a computation layer in an AI model are used as an example for description.

The model training method shown in FIG. 2 may specifically include the following steps.

S201: The compute node 101 stores input data of a computation layer N during a forward computation process of the AI model, where the computation layer N includes a compute module and a forward communication operator, and the compute module is executed before the forward communication operator in a forward computation phase.

N is a positive integer greater than 1.

In this embodiment, the AI model may include a plurality of computation layers. For ease of understanding, an example in which the AI model includes N computation layers (namely, a computation layer 1 to the computation layer N) is used for description. The computation layer N-1 and the computation layer N are two computation layers included in the AI model. In addition, in the forward computation phase, the computation layer N-1 is a previous computation layer of the computation layer N. In other words, after completing computation on the computation layer N-1, the compute node 101 may use output data of the computation layer N-1 as the input data of the computation layer N.

The computation layer N may include at least one compute module and at least one forward communication operator. For example, the computation layer N includes one compute module and one communication operator. A compute module is a neural network module that includes an activation function and has specific computation logic in a computation layer. In this way, after executing the compute module, the compute node 101 can obtain a corresponding activation value through computation by using the activation function in the compute module. For example, the compute module may be an attention compute module, a feedforward neural network (feedforward neural network, FNN), or the like. A forward communication operator is an operator used for interacting with another compute node in the forward computation phase. For example, in a distributed training scenario of tensor parallelism, the forward communication operator may be an all-reduce operator; and in a distributed training scenario of sequence parallelism, the forward communication operator may be a reduce-scatter operator or the like. This is not limited herein.

In the forward computation phase, the compute module is executed before the forward communication operator. In other words, the compute node 101 executes the forward communication operator after executing the compute module.

In the forward computation phase, the compute node 101 may perform computation on the input data by using the compute module in the computation layer N, to obtain a corresponding activation value, and obtain intermediate data through further computation based on the activation value, or determine the activation value as intermediate data. Then, the compute node 101 may execute the forward communication operator in the computation layer N, to exchange, with another compute node, the intermediate data generated by executing the computation layer N. In this way, the compute node 101 may process intermediate data respectively generated by compute nodes. For example, in the distributed training scenario of tensor parallelism, the compute node 101 may splice intermediate data respectively generated by a plurality of compute nodes; and in the distributed training scenario of sequence parallelism, the compute node 101 may aggregate intermediate data respectively generated by a plurality of compute nodes.

In this embodiment, the compute node 101 may store output data of the computation layer N, but does not store the activation value generated by the computation layer N, to prevent the activation value from occupying storage resources in the compute node 101. For another computation layer, the compute node 101 may store both output data of the another computation layer and an activation value generated by the another computation layer, or the compute node 101 may store only output data of the another computation layer or the like. This is not limited herein.

In practical applications, the compute node 101 may perform corresponding computation based on the computation layers with reference to the foregoing manner, to complete a forward computation process.

S202: The compute node 101 obtains, during a backward computation process of the AI model, a recomputation layer of the AI model during the backward computation process.

In this embodiment, it is assumed that the compute node 101 needs to update a value of a parameter in the computation layer N based on the activation value generated by the computation layer N. However, during the forward computation process, the compute node 101 does not store the activation value generated by the computation layer N. Therefore, during the backward computation process, the compute node 101 may determine that recomputation needs to be performed on the computation layer N, to obtain the activation value generated by the computation layer N. In this case, the compute node 101 may determine the computation layer N as a recomputation layer during the backward computation process.

Similarly, for a computation layer on which parameter update needs to be performed based on an activation value in a backward computation phase in the AI model, the compute node 101 may determine the computation layer as a recomputation layer.

S203: The compute node 101 obtains a forward communication operator in the recomputation layer.

It may be understood that, for a plurality of recomputation layers determined by the compute node 101, some recomputation layers may each include at least one forward communication operator, and the other recomputation layers may include no forward communication operator. Therefore, the compute node 101 may further filter the determined recomputation layers to obtain a recomputation layer including a forward communication operator, and can further determine the forward communication operator in the recomputation layer.

In this embodiment, the obtained forward communication operator may be an end forward communication operator in the recomputation layer. The end forward communication operator is located at an end of the recomputation layer. In other words, in the forward computation phase, a forward communication operator executed after all compute modules in the recomputation layer have been executed is the end forward communication operator described in this embodiment.

S204: The compute node 101 removes the forward communication operator from the recomputation layer.

In this embodiment, assuming that the computation layer N is a recomputation layer, the compute node 101 first removes the forward communication operator from the computation layer N to obtain a new computation layer N, namely, the recomputation layer from which the forward communication operator has been removed. For ease of differentiation, the computation layer N from which the forward communication operator has been removed is referred to as a target computation layer N below. For example, the compute node 101 may copy program code of the computation layer N, and delete, from the program code, a code part corresponding to the forward communication operator, so that remaining program code is program code of the target computation layer N. That a computation layer or a target computation layer outputs data or generates an activation value described in this embodiment specifically means that the compute node 101 executes program code corresponding to the computation layer or the target computation layer, to implement an operation of outputting the data or generating the activation value.

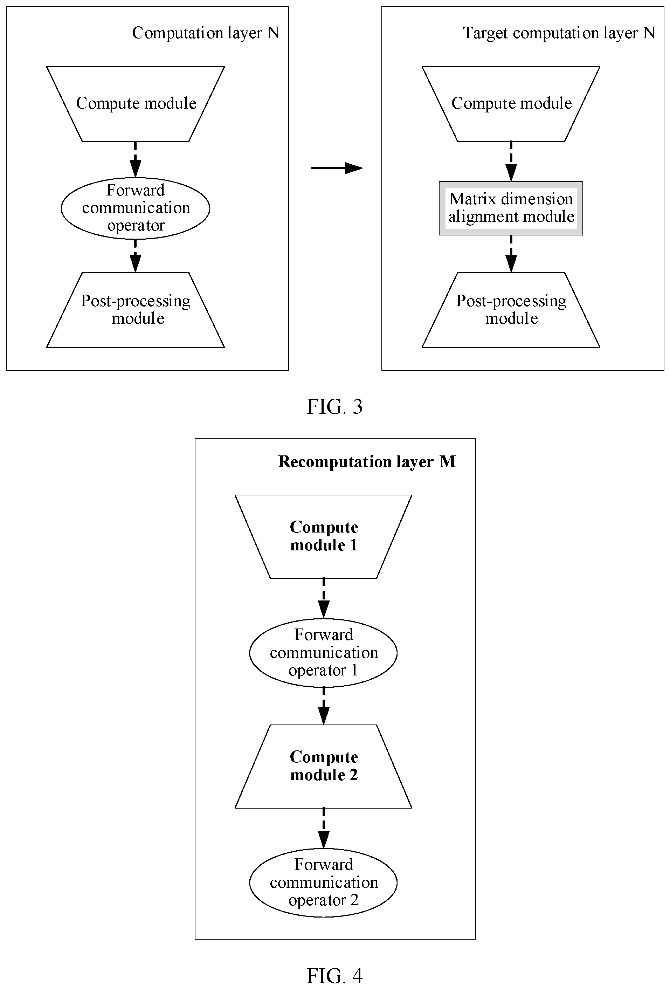

In practical applications, in the recomputation layer, another compute module may be further included following the to-be-removed forward communication operator, for example, a residual connection module (configured to resolve the problem of vanishing gradients or exploding gradients). For ease of understanding, the another compute module is referred to as a post-processing module below. As shown in FIG. 3, a forward communication operator is located between a compute module and a post-processing module, in other words, an execution order of the forward communication operator in a recomputation layer is after an execution order of the compute module and before an execution order of the post-processing module. In this case, if a matrix dimension (shape) of an activation value obtained by the compute module through computation is inconsistent with a matrix dimension of input data of the post-processing module, after the forward communication operator located in the middle is removed, the matrix dimension of the activation value output by the compute module does not match the matrix dimension of the input data of the post-processing module. Consequently, the compute node 101 may detect that an exception exists in the input data in a process of executing the post-processing module and stop executing the post-processing module, resulting in model training interruption.

Therefore, in a further possible implementation, after removing the forward communication operator, the compute node 101 may further add a matrix dimension alignment module between the compute module and the post-processing module. As shown in FIG. 3, for example, program code of the matrix dimension alignment module may be added to the program code of the target computation layer N. The matrix dimension alignment module is a module that processes data based on a matrix dimension. In this way, after the forward communication operator is removed, the matrix dimension alignment module can pad output data (namely, the foregoing intermediate data) of the compute module based on the matrix dimension of the input data of the post-processing module. Specifically, the matrix dimension alignment module may pad a matrix corresponding to the output data with a plurality of elements, where a value of each element may be 0 (or another value). In this way, a matrix dimension of output data of the compute module obtained through padding is consistent with the matrix dimension of the input data of the post-processing module, so that in the backward computation phase, the matrix dimension alignment module can input the output data obtained through padding into the post-processing module for corresponding computation.

Similarly, for another recomputation layer including a forward communication operator, the compute node 101 may remove the forward communication operator with reference to the foregoing manner of processing the computation layer N. Details are not described herein again.

S205: The compute node 101 performs backward computation on the recomputation layer from which the forward communication operator has been removed.

In a possible implementation, during the backward computation process, the compute node 101 may first execute the recomputation layer from which the forward communication operator has been removed, to obtain an activation value.

During specific implementation, for example, the recomputation layer from which the forward communication operator has been removed is specifically the target computation layer N. The compute node 101 may perform recomputation on the target computation layer N based on the output data of the computation layer N-1 stored in the forward computation phase, to obtain an activation value generated by the target computation layer N. The compute node 101 may use the output data of the computation layer N-1 as input data of the target computation layer N, and perform computation on the input data by using an activation function (for example, a Sigmoid function) in the compute module, to obtain an activation value generated by using the activation function. Usually, the activation value obtained through computation is the same as the activation value obtained through computation on the computation layer N in the forward computation phase. In this way, the compute node 101 may obtain, by performing recomputation on the target computation layer N, the activation value that is not stored in the forward computation phase. In addition, in a process of performing recomputation on the target computation layer N, the compute node 101 may not need to execute the removed forward communication operator. This can effectively avoid communication latency generated when the compute node 101 executes the forward communication operator.

After obtaining the activation value by performing recomputation on the target computation layer N, the compute node 101 may update the parameter in the original computation layer N in the AI model based on the activation value.

Specifically, the compute node 101 may obtain, through computation based on the activation value, a gradient corresponding to each parameter in the computation layer N, and then the compute node 101 updates a value of the parameter based on the gradient corresponding to each parameter. Specifically, the compute node 101 may increase or decrease the value of the parameter based on a direction indicated by the gradient.

When the computation layer N is a last computation layer in the AI model, the compute node 101 may obtain, through computation based on an inference result and an actual result of the AI model and the activation value, the gradient corresponding to each parameter in the computation layer N, to update the value of each parameter in the computation layer N based on the gradient.

When the computation layer N is not a last computation layer in the AI model (assuming that the AI model includes N+1 computation layers), the compute node 101 may further obtain a gradient of a next computation layer (namely, a computation layer N+1) of the computation layer N, for example, obtain, by executing a backward communication operator, a gradient used by the computation layer N+1 for parameter update. Then, the compute node 101 may obtain, through computation based on the gradient of the computation layer N+1 and the activation value generated by the computation layer N, the gradient corresponding to each parameter in the computation layer N, to update the value of each parameter in the computation layer N based on the gradient.

In this way, in the backward computation phase, the compute node 101 may perform parameter update on a computation layer (namely, the computation layer N) in the manner described in step S202 to step S205. For another computation layer in the AI model, the compute node 101 may also use a manner similar to the foregoing manner. When an activation value is stored, the compute node 101 updates a parameter in the computation layer based on the stored activation value. When an activation value is not stored, the compute node 101 may determine the computation layer as a recomputation layer, obtain the activation value through recomputation by executing a recomputation layer from which a forward communication operator has been removed, and then update a parameter in the computation layer based on the activation value obtained through recomputation. The rest can be deduced by analogy until parameter update on all the computation layers in the AI model is completed. In this case, the backward computation process ends. In addition, each compute node may perform, with reference to the foregoing implementation, a forward computation process and a backward computation process on an AI model deployed on the compute node, to complete one round of model training of the AI model in the distributed training system 10.

In this embodiment, the compute node 101 does not need to execute the removed forward communication operator during a recomputation process. This can also avoid impact of communication latency generated by executing the forward communication operator on model parameter update efficiency, so that overall efficiency of performing distributed training on the AI model can be improved. In an actual test scenario, more than 25% of time consumed by the recomputation process can be reduced by optimizing the forward communication operator.

In the embodiment shown in FIG. 2, an example in which one computation layer includes one forward communication operator is used for description. In an actual application scenario, some computation layers in the AI model may each include a plurality of forward communication operators. As shown in FIG. 4, a computation layer M (namely, a recomputation layer M in a backward computation phase) may include two compute modules and two forward communication operators, and an execution sequence of the compute modules and the forward communication operators is shown in FIG. 4. In this case, during a backward computation process, the compute node 101 may remove all the forward communication operators included in the computation layer.

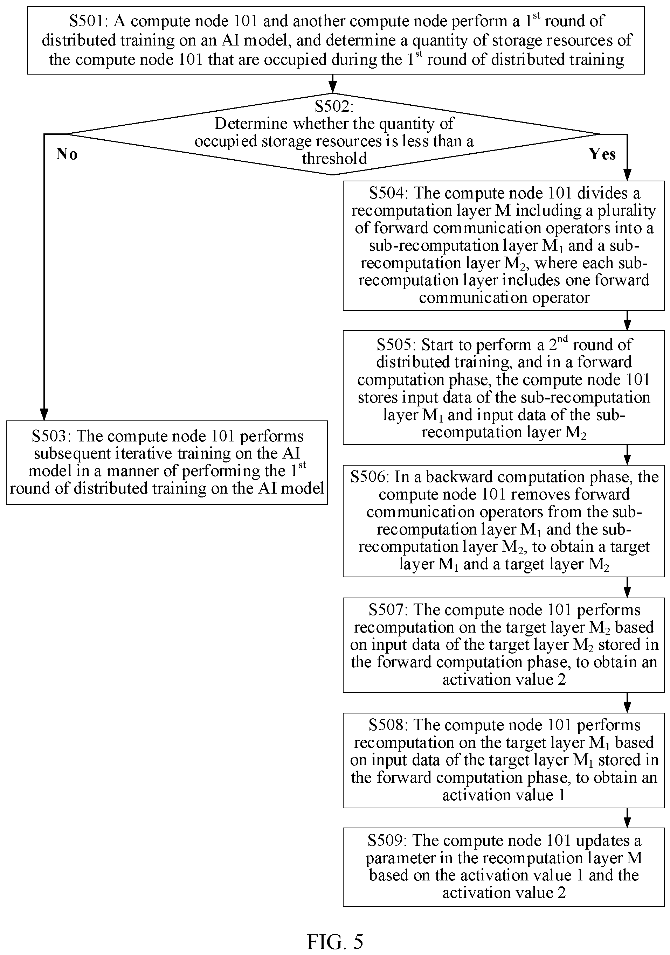

With reference to FIG. 5, the following describes a schematic flowchart of another model training method according to an embodiment of this application. In the embodiment shown in FIG. 5, a computation layer M in an AI model includes two forward communication operators (where M is a positive integer greater than 1). As shown in FIG. 5, the method may specifically include the following steps.

S501: A compute node 101 and another compute node perform a 1^{st} round of distributed training on the AI model, and determine a quantity of storage resources of the compute node 101 that are occupied during the 1^{st} round of distributed training.

In practical applications, for a computation layer that does not store an activation value in a forward computation phase, the compute node 101 may determine the computation layer as a recomputation layer in a backward computation phase. In addition, when the recomputation layer includes a plurality of forward communication operators, the compute node 101 may split the recomputation layer into a plurality of sub-recomputation layers, to subsequently remove a forward communication operator in each sub-recomputation layer to perform recomputation. Correspondingly, the compute node 101 needs to store input data of each sub-recomputation layer during a forward computation process, so that the compute node 101 can perform recomputation on the sub-recomputation layer based on the stored input data during a backward computation process.

Therefore, the compute node 101 may first estimate whether a quantity of storage resources of the compute node 101 meets a recomputation layer division condition. In addition, when the quantity of storage resources of the compute node 101 meets the recomputation layer division condition, the compute node 101 may determine to divide the recomputation layer into a plurality of sub-recomputation layers. When the quantity of storage resources of the compute node 101 does not meet the recomputation layer division condition, the compute node 101 may not perform an operation of dividing the recomputation layer into a plurality of sub-recomputation layers.

In this embodiment, the compute node 101 may complete one round of distributed training on the AI model when the recomputation layer is not divided into a plurality of sub-recomputation layers, to obtain the quantity of storage resources of the compute node 101 that are occupied during the 1^{st} round of distributed training, so that the compute node 101 can determine, based on the quantity of occupied storage resources, whether the quantity of storage resources of the compute node 101 meets the recomputation layer division condition.

For example, the occupied storage resource may be, for example, a memory resource of the compute node 101.

The occupied storage resource is used to store output data of each computation layer in the forward computation phase, and may be further used to store activation values generated by some computation layers (where the computation layers are not considered as recomputation layers during the backward computation process).

The compute node 101 may perform the forward computation process and the backward computation process with reference to the manner in the embodiment shown in FIG. 2, to complete the 1^{st} round of distributed training on the AI model.

S502: The compute node 101 determines whether the quantity of storage resources of the compute node 101 that are occupied during the 1^{st} round of distributed training is less than a threshold. In addition, if the quantity of storage resources is not less than the threshold, step S503 is performed; or if the quantity of storage resources is less than the threshold, step S504 is performed.

The threshold may be, for example, set by a skilled person based on a total quantity of storage resources of the compute node 101, or may be obtained by the compute node 101 through computation based on a total quantity of storage resources of the compute node 101. This is not limited herein. For example, the threshold may be, for example, 85% of a maximum quantity of storage resources of the compute node 101. This is not limited herein.

S503: When the quantity of storage resources of the compute node 101 that are occupied during the 1^{st} round of distributed training is greater than or equal to the threshold, the compute node 101 performs subsequent iterative training on the AI model in a manner of performing the 1^{st} round of distributed training on the AI model.

S504: When the quantity of storage resources of the compute node 101 that are occupied during the 1^{st} round of distributed training is less than the threshold, the compute node 101 determines the computation layer M including a plurality of forward communication operators as a recomputation layer M, and divides, based on a quantity of forward communication operators included in the recomputation layer M, the recomputation layer M into two sub-recomputation layers, which are respectively a sub-recomputation layer M₁ and a sub-recomputation layer M₂, and each sub-recomputation layer includes one forward communication operator.

The forward communication operator in each sub-recomputation layer may be an end forward communication operator in the sub-recomputation layer. In addition, the compute node 101 may determine a recomputation layer during the backward computation process and a forward communication operator in the recomputation layer with reference to the process described in FIG. 2. Details are not described herein again.

In this embodiment, the compute node 101 may sense storage resource occupation during model training by performing one round of distributed training on the AI model, and may further determine whether the maximum quantity of storage resources of the compute node 101 meets a condition for dividing the recomputation layer (referred to as a recomputation layer division condition for short below). If the condition for dividing the recomputation layer is met, to be specific, a quantity of storage resources occupied by the compute node 101 during one round of distributed training is less than the threshold (for example, the maximum quantity or 85% of the maximum quantity of storage resources), the compute node 101 may divide a recomputation layer including a plurality of forward communication operators into a plurality of sub-recomputation layers. If the condition for dividing the recomputation layer is not met, to be specific, a quantity of storage resources occupied by the compute node 101 during one round of distributed training is greater than or equal to the threshold, the compute node 101 may not split a recomputation layer including a plurality of forward communication operators.

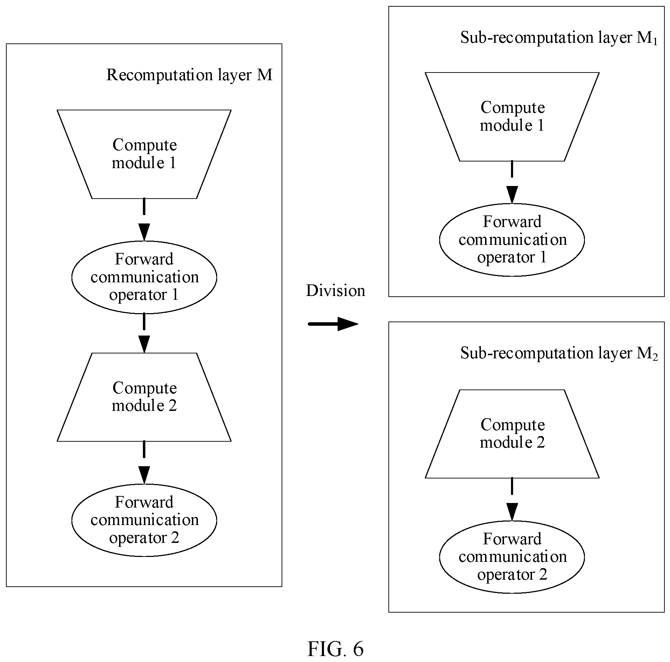

The recomputation layer M shown in FIG. 4 is used as an example. The recomputation layer M sequentially includes a compute module 1, a forward communication operator 1, a compute module 2, and a forward communication operator 2. For example, the compute module 1 may be an attention compute module, the compute module 2 may be a feedforward neural network module, and both the forward communication operator 1 and the forward communication operator 2 may be all-reduce operators. In this case, the compute node 101 may divide the recomputation layer M into a sub-recomputation layer M₁ and a sub-recomputation layer M₂ shown in FIG. 6. The sub-recomputation layer M₁ includes the compute module 1 and the forward communication operator 1, and the sub-recomputation layer M₂ includes the compute module 2 and the forward communication operator 2.

In a possible implementation, after completing the 1^{st} round of distributed training on the AI model, the compute node 101 may determine storage resource usage during one round of distributed training. When a quantity of storage resources used during one round of distributed training is less than the threshold, it indicates that the compute node 101 still has a large quantity of storage resources to store other data. In this case, the compute node 101 may divide a recomputation layer including a plurality of forward communication operators into a plurality of sub-recomputation layers. Each sub-recomputation layer may include only one forward communication operator, and the forward communication operator is located at an end of the sub-recomputation layer (where the forward communication operator may be referred to as an end forward communication operator), so that the forward communication operator in the sub-recomputation layer can be removed in a subsequent recomputation phase. In this embodiment, an example in which the recomputation layer M is divided into a plurality of sub-recomputation layers is used for description. For another recomputation layer determined during the backward computation process, the recomputation layer may also be divided into a plurality of sub-recomputation layers with reference to a similar manner.

In addition, when a quantity of storage resources used during one round of distributed training is greater than or equal to the threshold, it indicates that storage resources of the compute node 101 during training are limited and insufficient for storing other data. In this case, the compute node 101 may perform a plurality of rounds of iterative training on the AI model with reference to the manner in the embodiment shown in FIG. 2.

S505: The compute node 101 and the another compute node start to perform a 2^{nd} round of distributed training on the AI model, and in the forward computation phase, the compute node 101 stores input data of the sub-recomputation layer M₁ and input data of the sub-recomputation layer M₂.

In this embodiment, after dividing the recomputation layer M into a plurality of sub-recomputation layers, the compute node 101 may store input data corresponding to each sub-recomputation layer in the forward computation phase, to subsequently perform a corresponding recomputation process on the sub-recomputation layer in the backward computation phase by using the stored input data. The input data of the sub-recomputation layer M₁ is input data of the recomputation layer M, output data of the sub-recomputation layer M₁ is the input data of the sub-recomputation layer M₂, and output data of the sub-recomputation layer M₂ is output data of the recomputation layer M. In other words, in comparison with the 1^{st} round of distributed training, during the 2^{nd} round of distributed training, the output data of the sub-recomputation layer M₁ is additionally stored (to perform recomputation by using the output data as the input data of the subcomputation layer M₂ during the backward computation process).

When another recomputation layer in the AI model is also divided into a plurality of sub-recomputation layers, in the forward computation phase, the compute node 101 may store input data of each sub-recomputation layer included in the another recomputation layer.

S506: In the backward computation phase, the compute node 101 removes the forward communication operator from the sub-recomputation layer M₁ to obtain a target layer M₁, and removes the forward communication operator from the sub-recomputation layer M₂ to obtain a target layer M₂.

For an implementation in which the compute node 101 removes a forward communication operator from each sub-recomputation layer, refer to related descriptions of removing the communication operator from the computation layer N in the embodiment shown in FIG. 2. Details are not described herein again.

S507: The compute node 101 performs recomputation on the target layer M₂ based on input data of the target layer M₂ stored in the forward computation phase, to obtain an activation value 2 generated by the target layer M₂.

In this embodiment, after the computation layer is divided, because a value of a parameter in the target layer M₂ is first updated in the backward computation phase, the compute node 101 may first perform recomputation on the target layer M₂ based on a parameter update sequence in the backward computation phase, to obtain the corresponding activation value 2. Then, the compute node 101 performs step S508 to perform recomputation on the target layer M₁.

S508: The compute node 101 performs recomputation on the target layer M₁ based on input data of the target layer M₁ stored in the forward computation phase, to obtain an activation value 1 generated by the target layer M₁.

In this embodiment, for a specific implementation process in which the compute node 101 performs recomputation on the target layer M₁ and the target layer M₂, refer to related descriptions of performing recomputation on the target computation layer N in the embodiment shown in FIG. 2. Details are not described herein again.

S509: The compute node 101 updates a parameter in the recomputation layer M based on the activation value 1 and the activation value 2.

During specific implementation, the compute node 101 may generate a backward computation graph 1 based on computation logic in the target layer M₁, and generate a backward computation graph 2 based on computation logic in the target layer M₂. The backward computation graph 1 indicates logic of performing backward step-by-step computation on the target layer M₁, and the backward computation graph 2 indicates logic of performing backward step-by-step computation on the target layer M₂. Then, the compute node 101 may obtain, through computation based on the activation value 2, a gradient 2 corresponding to each parameter in the compute module 2. Specifically, the compute node 101 may obtain, through computation based on the activation value 2 and a gradient used to update a parameter in a computation layer M+1, the gradient 2 corresponding to each parameter in the compute module 2, and update a value of each parameter in the compute module 2 based on the gradient 2 and the computation logic indicated by the backward computation graph 2. Finally, the compute node 101 obtains, through computation based on the activation value 1, a gradient 1 corresponding to each parameter in the compute module 1. Specifically, the compute node 101 may obtain, through computation based on the activation value 1 and the gradient 2 used to update the parameter in the compute module 2, the gradient 1 corresponding to each parameter in the compute module 1, and update a value of each parameter in the compute module 1 based on the gradient 1 and the computation logic indicated by the backward computation graph 2.

Similarly, for another computation layer in the AI model, a value of a parameter in the computation layer may also be updated in the foregoing manner until parameters in all the computation layers in the AI model are updated. In this case, the 2^{nd} round of distributed training of the AI model is completed. In practical applications, the compute node 101 may perform a plurality of rounds of iterative training on the AI model with reference to step S504 to step S509, until the AI model meets a model training termination condition.

It should be noted that an execution sequence of step S501 to step S509 in this embodiment is merely used as an implementation example, and is not used for limitation. In other words, in another embodiment, the compute node 101 may alternatively perform the model training process in another sequence of steps. In addition, in this embodiment, the compute node 101 determines, based on the quantity of storage resources occupied during the 1^{st} round of distributed training, whether to divide a recomputation layer including a plurality of forward communication operators. In another embodiment, the compute node 101 may alternatively determine, in another manner, whether the quantity of storage resources of the compute node 101 meets the recomputation layer division condition. For example, the compute node 101 may estimate, based on a quantity of parameters in the AI model, whether a quantity of storage resources occupied when the compute node 101 trains the AI model after a computation layer is split is greater than the threshold, to determine whether the quantity of storage resources of the compute node 101 meets a computation layer division condition. In this way, when determining that the quantity of storage resources of the compute node 101 can meet the computation layer division condition, during the 1^{st} round of distributed training of the AI model, the compute node 101 may divide, in the backward computation phase, a recomputation layer including a plurality of forward communication operators into a plurality of sub-recomputation layers, and perform recomputation on each sub-recomputation layer from which the forward communication operator has been removed.

In this embodiment, when the compute node 101 has sufficient storage resources, the compute node 101 may divide a computation layer including a plurality of forward communication operators into a plurality of sub-recomputation layers, and can remove, in the backward computation phase, all the forward communication operators in the recomputation layer by performing recomputation on the sub-recomputation layers from which the forward communication operators have been removed. In this way, impact of communication latency generated by executing the forward communication operator on model parameter update efficiency can further be avoided, so that overall efficiency of performing distributed training on the AI model can be improved. In practical applications, in the backward computation phase, for all the recomputation layers in the AI model, the compute node 101 may remove all forward communication operators from all the recomputation layers.

The embodiments shown in FIG. 5 and FIG. 6 are applicable to a distributed training scenario of tensor parallelism. In this case, the forward communication operator included in the computation layer may be an all-reduce operator. To be specific, after executing the all-reduce operator, the compute node 101 can obtain intermediate data (obtained based on an activation value) generated by another compute node, and perform aggregation computation (for example, perform summation) on intermediate data respectively generated by the compute node 101 to a compute node 104, so that the compute node can perform a subsequent computation process based on an aggregation result.

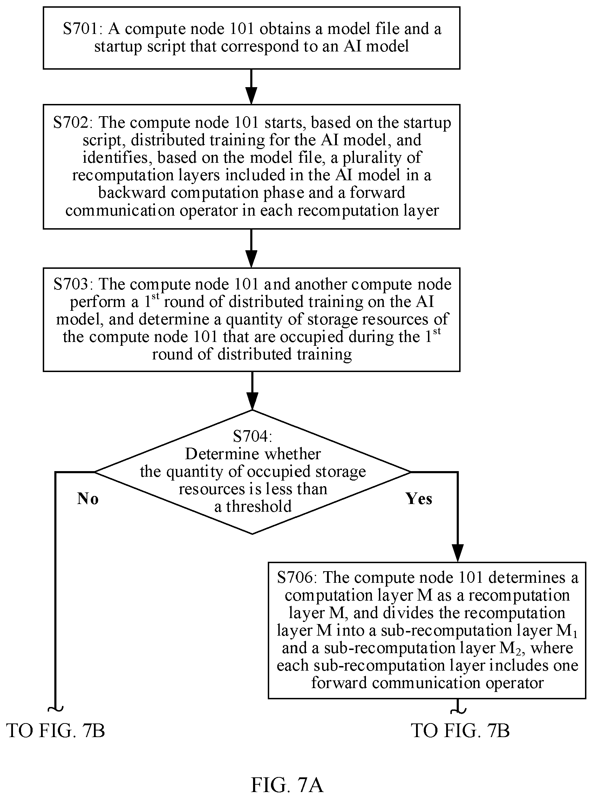

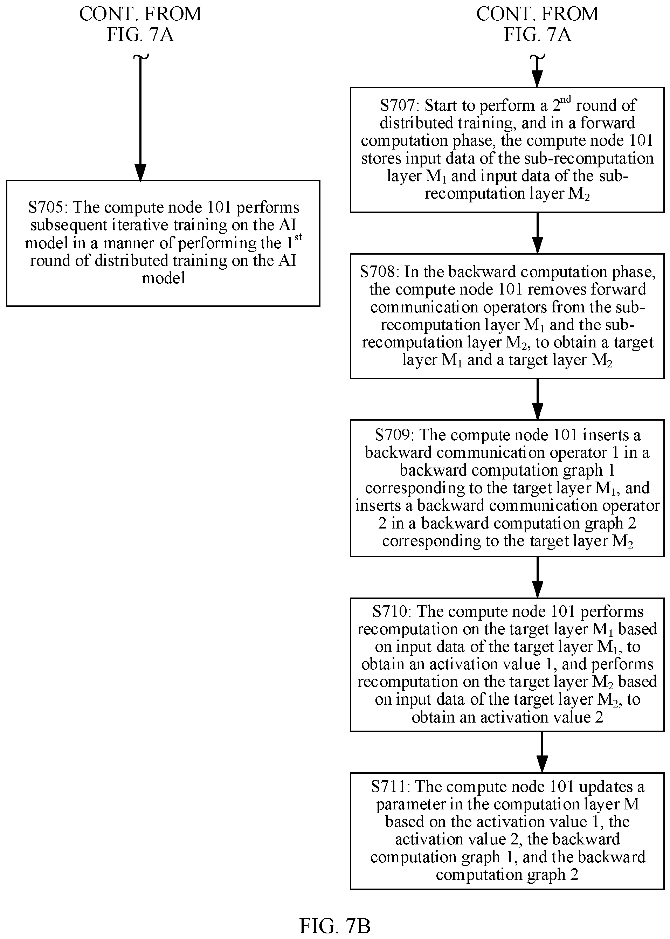

However, in another possible distributed training scenario, for example, a distributed training scenario of sequence parallelism, the forward communication operator included in the computation layer indicates to splice intermediate data respectively generated by a plurality of compute nodes. For example, the forward communication operator may be a reduce-scatter operator. In this case, in the backward computation phase, the compute node 101 needs to execute a corresponding communication operator (referred to as a backward communication operator below) to exchange a gradient with another compute node and perform gradient aggregation, to update a parameter in the computation layer based on an aggregated gradient. For example, the backward communication operator may be an all-reduce operator. Therefore, the compute node 101 may first execute the backward communication operator before updating the parameter in the computation layer. The following describes this by using an example with reference to FIG. 7A and FIG. 7B.

FIG. 7A and FIG. 7B are a schematic flowchart of still another model training method. As shown in FIG. 7A and FIG. 7B, the method may include the following steps.

S701: A compute node 101 obtains a model file and a startup script that correspond to an AI model.

The model file is used to record program code of the to-be-trained AI model, and the model file can indicate a structure of the AI model and an initial value of a model parameter. The startup script is used to record program code that needs to be executed when model training is started. In addition, the startup script may further include configuration content such as whether to enable recomputation, whether to enable recomputation layer division (to be specific, dividing a recomputation layer including a plurality of forward communication operators into a plurality of sub-recomputation layers), and a parallel manner of distributed training. In practical applications, a user may configure the configuration content in the startup script. In this embodiment, an example in which the user sets, in the startup script, a configuration for enabling the recomputation, a configuration for enabling the recomputation layer division, and the parallel manner of distributed training as sequence parallelism is used for description.

In the distributed training system 10, when a plurality of compute nodes 101 are used to perform distributed training on the AI model, the model file and the startup script that correspond to the AI model may be deployed on each compute node, so that each compute node starts training of the AI model based on the startup script and the model file.

S702: The compute node 101 starts, based on the startup script, the distributed training for the AI model, and identifies, based on the model file, a plurality of recomputation layers included in the AI model in a backward computation phase and a forward communication operator in each recomputation layer.

During specific implementation, the compute node 101 may analyze the model file, and determine one or more computation layers in the AI model that do not store an activation value in a forward computation phase but need to use the activation value for computation of a gradient in the backward computation phase. The computation layer is a recomputation layer on which recomputation needs to be performed to obtain the activation value in the backward computation phase. Then, the compute node 101 may identify a forward communication operator included in the computation layer, for example, a reduce-scatter operator, and mark the identified forward communication operator, to be specific, mark the forward communication operator as an operator that can be removed in the backward computation phase.

S703: The compute node 101 and another compute node perform a 1^{st} round of distributed training on the AI model, and determine a quantity of storage resources of the compute node 101 that are occupied during a 1^{st} round of distributed training.

In the backward computation phase included in the 1^{st} round of distributed training, the compute node 101 may not perform processes of removing the forward communication operator and dividing the recomputation layer.

S704: The compute node 101 determines whether the quantity of storage resources of the compute node 101 that are occupied during the 1^{st} round of distributed training is less than a threshold. In addition, if the quantity of storage resources is not less than the threshold, step S705 is performed; or if the quantity of storage resources is less than the threshold, step S706 is performed.

S705: When the quantity of storage resources of the compute node 101 that are occupied during the 1^{st} round of distributed training is greater than or equal to the threshold, the compute node 101 performs subsequent iterative training on the AI model in a manner of performing the 1^{st} round of distributed training on the AI model.

S706: When the quantity of storage resources of the compute node 101 that are occupied during the 1^{st} round of distributed training is less than the threshold, the compute node 101 determines a computation layer M as a recomputation layer M, and divides, based on a quantity of forward communication operators included in the recomputation layer M, the recomputation layer M into two sub-recomputation layers, which are respectively a sub-recomputation layer M₁ and a sub-recomputation layer M₂, and each sub-recomputation layer separately includes one forward communication operator.

S707: The compute node 101 and the another compute node start to perform a 2^{nd} round of distributed training on the AI model, and in the forward computation phase, the compute node 101 stores input data of the sub-recomputation layer M₁ and input data of the sub-recomputation layer M₂.

S708: In the backward computation phase, the compute node 101 removes a forward communication operator from the sub-recomputation layer M₁ to obtain a target layer M₁, and removes a forward communication operator from the sub-recomputation layer M₂ to obtain a target layer M₂.

S709: The compute node 101 inserts, in a backward computation graph 1 corresponding to the target layer M₁, a backward communication operator 1 used to perform gradient exchange, and inserts, in a backward computation graph 2 corresponding to the target layer M₂, a backward communication operator 2 used to perform gradient exchange.

In an implementation example, the compute node 101 may be preconfigured with a mapping relationship. For example, the mapping relationship may be preconfigured in the compute node 101 by a skilled person. The mapping relationship is a correspondence between a forward communication operator and a backward communication operator. For example, when the forward communication operator is reduce-scatter, the backward communication operator may be all-gather or the like. In the forward computation phase, the compute node 101 can exchange intermediate data with another compute node by executing the forward communication operator. In the backward computation phase, the compute node 101 can exchange a gradient (used to update a model parameter) with another compute node by executing the backward communication operator.

In the backward computation phase, the compute node 101 may generate the backward computation graph 1 based on computation logic in the target layer M₁. The backward computation graph 1 indicates logic of performing backward step-by-step computation on the target layer M₁, which is usually opposite to the computation logic in the target layer M₁. Because the target layer M₁ does not include a forward communication operator 1, the backward computation graph 1 generated by the compute node 101 does not include the backward communication operator 1. Therefore, the compute node 101 may insert, in the backward computation graph 1, the backward communication operator 1 corresponding to the removed forward communication operator 1. Specifically, the compute node 101 may first search for the mapping relationship based on the forward communication operator 1, to determine the backward communication operator 1 corresponding to the forward communication operator 1. Then, the compute node 101 inserts the backward communication operator 1 in the backward computation graph 1, for example, may insert the backward communication operator 1 in a start position in the backward computation graph 1. In this way, when performing parameter update based on the backward computation graph 1, the compute node 101 may first execute the backward communication operator 1 to obtain gradients respectively obtained by the plurality of compute nodes through computation for the target layer M₁, and then perform parameter update based on the gradients obtained by the plurality of compute nodes through computation.

The compute node 101 may automatically perform an operation of inserting the backward communication operator 1 in the backward computation graph 1, or the compute node 101 may insert the backward communication operator 1 in the backward computation graph 1 under a manual indication of the user. This is not limited herein.

Similarly, for the backward computation graph 2 generated by the target layer M₂, the compute node 101 may also insert the backward communication operator 2 corresponding to a forward communication operator 2 in the backward computation graph 2 with reference to the foregoing similar manner. Details are not described herein again.

It should be noted that, in this embodiment, an example in which the compute node 101 inserts the backward communication operator in the backward computation graph is used for description. In another embodiment, a process of inserting the backward communication operator in the backward computation graph may alternatively not be performed. For example, in the backward computation phase, the compute node 101 may generate the backward computation graph 1 based on computation logic in the sub-recomputation layer M₁. Because the sub-recomputation layer M₁ includes the forward communication operator 1, the backward computation graph 1 generated by the compute node 101 may include the backward communication operator 1 corresponding to the forward communication operator 1. In this way, when performing parameter update based on the backward computation graph 1, the compute node 101 may directly execute the backward communication operator 1 indicated in the backward computation graph 1 to obtain the gradients respectively obtained by the plurality of compute nodes through computation, and then perform parameter update based on the gradients obtained by the plurality of compute nodes through computation, without performing the process of inserting the backward communication operator in the backward computation graph 1.

S710: The compute node 101 performs recomputation on the target layer M₁ based on input data of the target layer M₁ stored in the forward computation phase, to obtain an activation value 1 generated by the target layer M₁, and performs recomputation on the target layer M₂ based on input data of the target layer M₂ stored in the forward computation phase, to obtain an activation value 2 generated by the target layer M₂.

The input data of the target layer M₁ is output data of a computation layer M-1. The input data of the target layer M₂ is output data of the target layer M₁.

S711: The compute node 101 updates a parameter in the computation layer M based on the activation value 1, the activation value 2, the backward computation graph 1, and the backward computation graph 2.

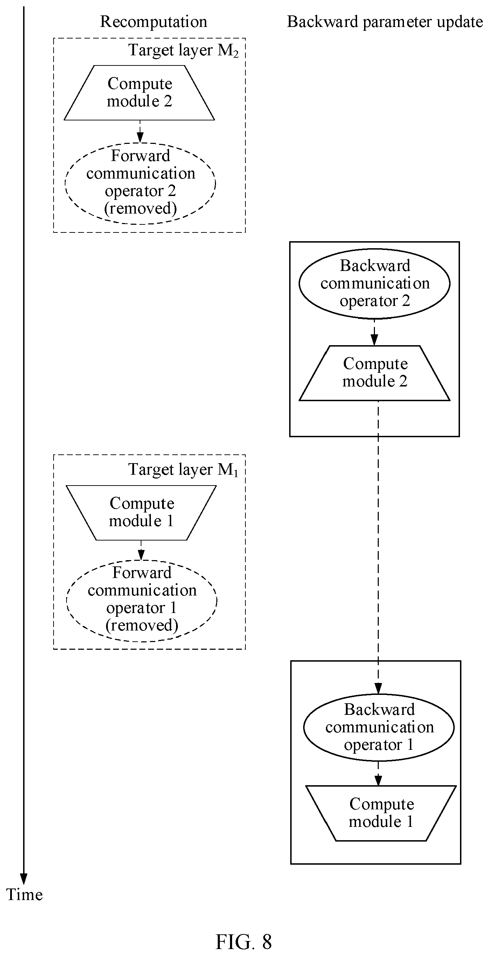

In a 1^{st} implementation example, when parameter update needs to be performed on a compute module 2, the compute node 101 may first perform recomputation on the target layer M₂ based on the input data of the target layer M₂ (namely, the output data of the target layer M₁) stored in the forward computation phase, to obtain the activation value 2. Then, the compute node 101 may execute the backward communication operator 2 in the backward computation graph 2 to obtain a gradient (referred to as an input gradient 2 below) used by each compute node to update a parameter in a computation layer M+1, so that the compute node 101 can obtain, through computation based on the input gradient 2 and the activation value 2 obtained through computation, a gradient 2 used to update the compute module 2. In this way, the compute node 101 can sequentially update parameters in the compute module 2 based on the gradient 2 obtained through computation and the computation logic indicated in the backward computation graph 2. Then, the compute node 101 performs parameter update on a compute module 1. In this case, as shown in FIG. 8, the compute node 101 may first perform recomputation on the target layer M₁, to obtain the activation value 1, and may execute the backward communication operator 1 in the backward computation graph 1 to obtain a gradient (referred to as an input gradient 1 below) used by each compute node to update a parameter in the compute module 1, so that the compute node 101 can obtain, through computation based on the input gradient 1 and the activation value 1 obtained through computation, a gradient 1 used to update the compute module 1. In this way, the compute node 101 can sequentially update parameters in the compute module 1 based on the gradient 1 obtained through computation and the computation logic indicated in the backward computation graph 1, as shown in FIG. 8. In this way, the compute node 101 implements parameter update on the computation layer M.

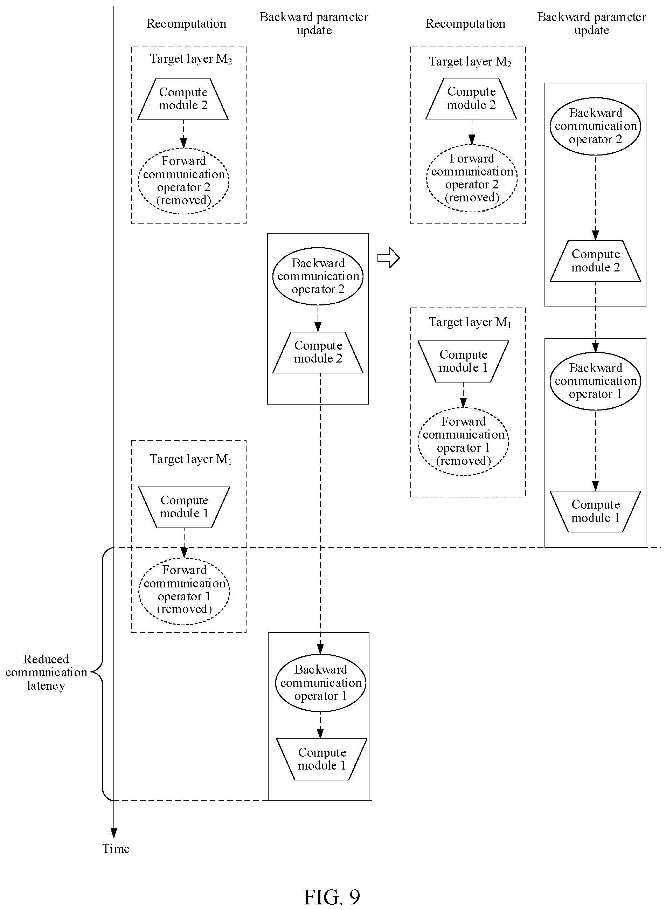

In a 2^{nd} implementation example, when parameter update needs to be performed on a compute module 2, the compute node 101 may first perform recomputation on the target layer M₂ based on the input data of the target layer M₂ stored in the forward computation phase. Because there is no dependency between a process in which the compute node 101 performs recomputation on the target layer M₂ and a process in which the compute node 101 executes the backward communication operator 2, in the process of performing recomputation on the target layer M₂, the compute node 101 may simultaneously execute the backward communication operator 2 to obtain an input gradient 2 used by each compute node to update a parameter in a computation layer M+1. In this way, after performing recomputation on the target layer M₂ and obtaining the activation value 2, the compute node 101 may obtain, through computation based on the input gradient 2 and the activation value 2 obtained through computation, a gradient 2 used to update the compute module 2, so that the compute node 101 can sequentially update parameters in the compute module 2 based on the gradient 2 and the computation logic indicated in the backward computation graph 2. After completing the recomputation on the target layer M₂, as shown in FIG. 9, the compute node 101 may start to perform recomputation on the target layer M₁ based on the input data of the target layer M₁ stored in the forward computation phase. In a process of performing recomputation on the target layer M₁, the compute node 101 may simultaneously execute the backward communication operator 1 to obtain an input gradient 1 used by each compute node to update a parameter in a compute module 2. In this way, after performing recomputation on the target layer M₁ and obtaining the activation value 1, the compute node 101 may obtain, through computation based on the input gradient 1 and the activation value 1 obtained through computation, a gradient 1 used to update the compute module 1, so that the compute node 101 can sequentially update parameters in the compute module 1 based on the gradient 1 and the computation logic indicated in the backward computation graph 1, to implement parameter update on the computation layer M, as shown in FIG. 9.

In this way, the compute node 101 may hide processes of executing the backward communication operator 2 and the backward communication operator 1 respectively in the processes of performing recomputation on the target layer M₂ and the target layer M₁, as shown in FIG. 9. This can avoid communication latency generated when the compute node 101 executes the backward communication operator 2 and the backward communication operator 1, affecting efficiency of updating a value of the parameter in the computation layer M, so that overall efficiency of performing distributed training on the AI model can be further improved. The compute node 101 hides the process of executing the backward communication operator after the process of performing recomputation on the target layer M₁, and reduced communication latency is shown in FIG. 9.

It should be noted that, in the implementation shown in FIG. 9, an example in which the processes of executing the backward communication operators 1 and 2 are hidden in the recomputation processes for the target layer M₁ and the target layer M₂ is used for description. In practical applications, the compute node 101 may further hide a computation process in the recomputation process. For example, after obtaining the activation value 2, the compute node 101 may start to perform the recomputation process on the target layer M₁ (to obtain the activation value 1), and simultaneously perform some or all processes of executing the backward communication operator 2, obtaining the gradient 2 through computation based on the activation value 2, and performing parameter update on the compute module 2. In this way, the compute node 101 performs another computation process or communication process in parallel in the process of performing recomputation, so that the overall efficiency of performing distributed training on the AI model can be further improved.

It should be noted that another appropriate step combination that can be figured out by a person skilled in the art based on the content described above also falls within the protection scope of this application. In addition, a person skilled in the art should further understand that embodiments described in this specification all belong to example embodiments, and the involved actions are not necessarily required by this application.

The foregoing describes the model training method provided in embodiments of this application with reference to FIG. 1 to FIG. 9. The following describes structures of a model training apparatus and a compute device provided in embodiments of this application with reference to the accompanying drawings.

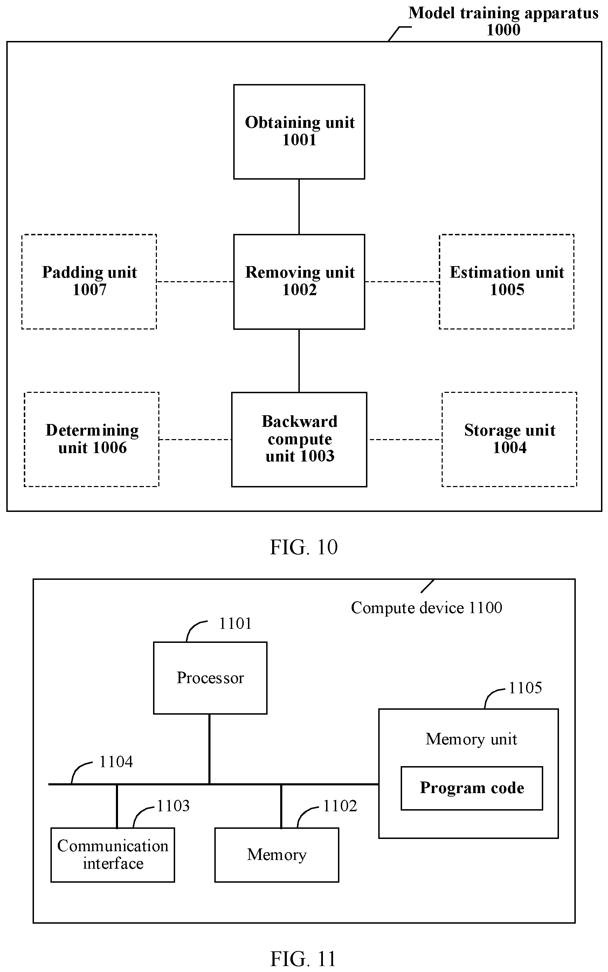

FIG. 10 is a diagram of a structure of a model training apparatus. The model training apparatus 1000 shown in FIG. 10 is used in a distributed training system. The distributed training system includes a plurality of compute nodes. The plurality of compute nodes are configured to perform distributed training on an artificial intelligence AI model. The AI model includes a forward communication operator. During a forward computation process, data is transmitted among the plurality of compute nodes by executing the forward communication operator.

As shown in FIG. 10, the model training apparatus 1000 includes:
an obtaining unit 1001, configured to: obtain a recomputation layer of the AI model during a backward computation process, and obtain a forward communication operator in the recomputation layer;
a removing unit 1002, configured to remove the forward communication operator from the recomputation layer; and
a backward compute unit 1003, configured to perform backward computation on the recomputation layer from which the forward communication operator has been removed.

In a possible implementation, the forward communication operator is an end forward communication operator in the recomputation layer.

In a possible implementation, the forward communication operator refers to all forward communication operators in the recomputation layer.

In a possible implementation, the recomputation layer includes a plurality of forward communication operators.

The removing unit 1002 is specifically configured to: divide the recomputation layer into a plurality of sub-recomputation layers, where each of the plurality of sub-recomputation layers includes one forward communication operator; and remove the forward communication operator included in each of the plurality of sub-recomputation layers.

The backward compute unit 1003 is specifically configured to perform backward computation on each of the plurality of sub-recomputation layers from which the forward communication operator has been removed.

In a possible implementation, the model training apparatus 1000 further includes:
a storage unit 1004, configured to store input data of each of the plurality of sub-recomputation layers during the forward computation process, where the input data is used to perform backward computation on the sub-recomputation layer.

In a possible implementation, the model training apparatus 1000 is used in a first compute node in the plurality of compute nodes, and the first compute node performs backward computation on the recomputation layer from which the forward communication operator has been removed.

The model training apparatus 1000 further includes:
an estimation unit 1005, configured to estimate, before the recomputation layer is divided into the plurality of sub-recomputation layers, whether a quantity of storage resources of the first compute node meets a recomputation layer division condition.

When dividing the recomputation layer into the plurality of sub-recomputation layers, the removing unit 102 is specifically configured to divide the recomputation layer into the plurality of sub-recomputation layers when the quantity of storage resources of the first compute node meets the recomputation layer division condition.

In a possible implementation, the model training apparatus 1000 further includes:
a determining unit 1006, configured to determine, based on a mapping relationship and the forward communication operator, a backward communication operator corresponding to the forward communication operator.

The backward compute unit 1003 is specifically configured to:
execute the recomputation layer from which the forward communication operator has been removed, to obtain an activation value;
execute the backward communication operator, to obtain a gradient used to update a parameter in the recomputation layer; and
update the parameter in the recomputation layer based on the activation value and the gradient.

In a possible implementation, the backward compute unit 1003 is specifically configured to execute the backward communication operator during execution of the recomputation layer from which the forward communication operator has been removed.

In a possible implementation, the recomputation layer includes a compute module, the forward communication operator, and a post-processing module, where an execution order of the forward communication operator in the recomputation layer is after an execution order of the compute module and before an execution order of the post-processing module.

The model training apparatus 1000 further includes:
a padding unit 1007, configured to: when a first matrix dimension of output data of the compute module does not match a second matrix dimension of input data of the post-processing module, pad the output data of the compute module based on the second matrix dimension.

Because the model training apparatus 1000 shown in FIG. 10 corresponds to the compute node 101 in the embodiments shown in FIG. 2, FIG. 5, FIG. 7A, and FIG. 7B, for a specific implementation of the model training apparatus 1000 shown in FIG. 10 and a technical effect thereof, refer to related descriptions in the embodiments shown in FIG. 2, FIG. 5, FIG. 7A, and FIG. 7B. Details are not described herein again.

FIG. 11 is a diagram of a hardware structure of a compute device 1100 according to this application. The compute device 1100 may implement, for example, the compute node 101 in the embodiments shown in FIG. 2, FIG. 5, FIG. 7A, and FIG. 7B.

As shown in FIG. 11, the compute device 1100 includes a processor 1101, a memory 1102, and a communication interface 1103. The processor 1101, the memory 1102, and the communication interface 1103 communicate with each other through a bus 1104, or may implement communication in another manner like wireless transmission. The memory 1102 is configured to store instructions, and the processor 1101 is configured to execute the instructions stored in the memory 1102. Further, the compute device 1100 may further include a memory unit 1105, and the memory unit 1105 may be connected to the processor 1101, the storage medium 1102, and the communication interface 1103 through the bus 1104. The memory 1102 stores program code, and the processor 1101 may invoke the program code stored in the memory 1102 to perform the following operations:
obtaining a recomputation layer of an AI model during a backward computation process, and obtaining a forward communication operator in the recomputation layer, where a distributed training system includes a plurality of compute nodes configured to perform distributed training on the AI model, and during the forward computation process, data is transmitted among the plurality of compute nodes by executing the forward communication operator;
removing the forward communication operator from the recomputation layer; and
performing backward computation on the recomputation layer from which the forward communication operator has been removed.

It should be understood that in this embodiment of this application, the processor 1101 may be a CPU, or the processor 1101 may be another general-purpose processor, a digital signal processor (DSP), an application-specific integrated circuit (ASIC), a field-programmable gate array (FPGA), another programmable logic device, a discrete gate, a transistor logic device, a discrete device component, or the like. The general-purpose processor may be a microprocessor or any conventional processor or the like.

The memory 1102 may include a read-only memory and a random access memory, and provide instructions and data to the processor 1101. The memory 1102 may further include a nonvolatile random access memory.

The memory 1102 may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example, and not limitation, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The communication interface 1103 is configured to communicate with another device connected to the compute device 1100. The bus 1104 may include a power bus, a control bus, a status signal bus, and the like, in addition to a data bus. However, for clear description, various types of buses in the figure are marked as the bus 1104.

It should be understood that the compute device 1100 according to this embodiment of this application may correspond to the model training apparatus 1000 in embodiments of this application, and may correspond to the methods performed by the compute node 101 in the methods shown in FIG. 2, FIG. 5, FIG. 7A, and FIG. 7B in embodiments of this application. The foregoing and other operations and/or functions implemented by the compute device 1100 are respectively used to implement the procedures of the corresponding methods in FIG. 2, FIG. 5, FIG. 7A, and FIG. 7B. For brevity, details are not described herein again.

Embodiments of this application further provide a computer-readable storage medium. The computer-readable storage medium may be any usable medium that can be stored by a compute device, or a data storage device, for example, a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions that indicate the compute device to perform the foregoing model training method.

Embodiments of this application further provide a computer program product. The computer program product includes one or more computer instructions. When the computer instructions are loaded and executed on a compute device, the procedures or the functions according to embodiments of this application are all or partially generated.

The computer instructions may be stored in a computer-readable storage medium or may be transmitted from a computer-readable storage medium to another computer-readable storage medium. For example, the computer instructions may be transmitted from a website, computer, or data center to another website, computer, or data center in a wired (for example, a coaxial cable, an optical fiber, or a digital subscriber line (DSL)) or wireless (for example, infrared, radio, or microwave) manner.

The computer program product may be a software installation package. When any method of the foregoing model training method needs to be used, the computer program product may be downloaded and executed on the compute device.

All or some of the foregoing embodiments may be implemented by using software, hardware, firmware, or any combination thereof. When software is used to implement embodiments, the foregoing embodiments may be all or partially implemented in a form of a computer program product. The computer program product includes one or more computer instructions. When the computer program instructions are loaded or executed on a computer, the procedures or the functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

Terms used in the foregoing embodiments are only intended to describe particular embodiments, but are not intended to limit this application. Terms "one", "a", and "this" of singular forms used in this specification and the appended claims of this application are also intended to include expressions such as "one or more", unless otherwise specified in the context clearly. It should be further understood that, in embodiments of this application, "one or more" means one, two, or more, and the character "/" generally indicates an "or" relationship between associated objects. In embodiments of this application, "simultaneous" refers to a case in a same time period, including a case at a same moment.

Reference to "one embodiment", "some embodiments", or the like described in this specification means that one or more embodiments of this application include a specific feature, structure, or characteristic described with reference to the embodiments. Therefore, statements such as "in an embodiment", "in some embodiments", "in other embodiments", and "in some other embodiments" appearing in different parts of this specification do not necessarily refer to a same embodiment, but mean "one or more but not all embodiments", unless otherwise specially emphasized in another manner. Terms "comprise", "include", "have", and other variants thereof all mean "include but is not limited to", unless otherwise specifically emphasized in another manner.

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A model training method, wherein the method is applied to a distributed training system, the distributed training system comprises a plurality of compute nodes, the plurality of compute nodes are configured to perform distributed training on an artificial intelligence AI model, the AI model comprises a forward communication operator, and during a forward computation process, data is transmitted among the plurality of compute nodes by executing the forward communication operator; and the method comprises:
obtaining a recomputation layer of the AI model during a backward computation process, and obtaining a forward communication operator in the recomputation layer;
removing the forward communication operator from the recomputation layer; and
performing backward computation on the recomputation layer from which the forward communication operator has been removed.

2. The method according to claim 1, wherein the forward communication operator is an end forward communication operator in the recomputation layer.

3. The method according to claim 1, wherein the forward communication operator refers to all forward communication operators in the recomputation layer.

4. The method according to claim 3, wherein the recomputation layer comprises a plurality of forward communication operators;
the removing the forward communication operator from the recomputation layer comprises:
dividing the recomputation layer into a plurality of sub-recomputation layers, wherein each of the plurality of sub-recomputation layers comprises one forward communication operator; and
removing the forward communication operator comprised in each of the plurality of sub-recomputation layers; and
the performing backward computation on the recomputation layer from which the forward communication operator has been removed comprises:
performing backward computation on each of the plurality of sub-recomputation layers from which the forward communication operator has been removed.

5. The method according to claim 4, wherein the method further comprises:
storing input data of each of the plurality of sub-recomputation layers during the forward computation process, wherein the input data is used to perform backward computation on the sub-recomputation layer.

6. The method according to claim 4 or 5, wherein a first compute node in the plurality of compute nodes performs backward computation on the recomputation layer from which the forward communication operator has been removed, and before the dividing the recomputation layer into the plurality of sub-recomputation layers, the method further comprises:
estimating whether a quantity of storage resources of the first compute node meets a recomputation layer division condition; and
the dividing the recomputation layer into the plurality of sub-recomputation layers comprises:
dividing the recomputation layer into the plurality of sub-recomputation layers when the quantity of storage resources of the first compute node meets the recomputation layer division condition.

7. The method according to any one of claims 1 to 6, wherein the method further comprises:
determining, based on a mapping relationship and the forward communication operator, a backward communication operator corresponding to the forward communication operator; and
the performing backward computation on the recomputation layer from which the forward communication operator has been removed comprises:
executing the recomputation layer from which the forward communication operator has been removed, to obtain an activation value;
executing the backward communication operator to obtain a gradient used to update a parameter in the recomputation layer; and
updating the parameter in the recomputation layer based on the activation value and the gradient.

8. The method according to claim 7, wherein the backward communication operator is executed during execution of the recomputation layer from which the forward communication operator has been removed.

9. The method according to any one of claims 1 to 8, wherein the recomputation layer comprises a compute module, the forward communication operator, and a post-processing module, and an execution order of the forward communication operator in the recomputation layer is after an execution order of the compute module and before an execution order of the post-processing module; and
the method further comprises:
when a first matrix dimension of output data of the compute module does not match a second matrix dimension of input data of the post-processing module, padding the output data of the compute module based on the second matrix dimension.

10. A model training apparatus, wherein the model training apparatus is used in a distributed training system, the distributed training system comprises a plurality of compute nodes, the plurality of compute nodes are configured to perform distributed training on an artificial intelligence AI model, the AI model comprises a forward communication operator, and during a forward computation process, data is transmitted among the plurality of compute nodes by executing the forward communication operator; and
the model training apparatus comprises:
an obtaining unit, configured to: obtain a recomputation layer of the AI model during a backward computation process, and obtain a forward communication operator in the recomputation layer;
a removing unit, configured to remove the forward communication operator from the recomputation layer; and
a backward compute unit, configured to perform backward computation on the recomputation layer from which the forward communication operator has been removed.

11. The apparatus according to claim 10, wherein the forward communication operator is an end forward communication operator in the recomputation layer.

12. The apparatus according to claim 10, wherein the forward communication operator refers to all forward communication operators in the recomputation layer.

13. The apparatus according to claim 12, wherein the recomputation layer comprises a plurality of forward communication operators;
the removing unit is specifically configured to: divide the recomputation layer into a plurality of sub-recomputation layers, wherein each of the plurality of sub-recomputation layers comprises one forward communication operator; and remove the forward communication operator comprised in each of the plurality of sub-recomputation layers; and
the backward compute unit is specifically configured to perform backward computation on each of the plurality of sub-recomputation layers from which the forward communication operator has been removed.

14. The apparatus according to claim 13, wherein the model training apparatus further comprises:
a storage unit, configured to store input data of each of the plurality of sub-recomputation layers during the forward computation process, wherein the input data is used to perform backward computation on the sub-recomputation layer.

15. The apparatus according to claim 13 or 14, wherein the model training apparatus is used in a first compute node in the plurality of compute nodes, and the first compute node performs backward computation on the recomputation layer from which the forward communication operator has been removed; and
the model training apparatus further comprises:
an estimation unit, configured to estimate, before the recomputation layer is divided into the plurality of sub-recomputation layers, whether a quantity of storage resources of the first compute node meets a recomputation layer division condition; and
when dividing the recomputation layer into the plurality of sub-recomputation layers, the removing unit is specifically configured to divide the recomputation layer into the plurality of sub-recomputation layers when the quantity of storage resources of the first compute node meets the recomputation layer division condition.

16. The apparatus according to any one of claims 10 to 15, wherein the model training apparatus further comprises:
a determining unit, configured to determine, based on a mapping relationship and the forward communication operator, a backward communication operator corresponding to the forward communication operator; and
the backward compute unit is specifically configured to:
execute the recomputation layer from which the forward communication operator has been removed, to obtain an activation value;
execute the backward communication operator to obtain a gradient used to update a parameter in the recomputation layer; and
update the parameter in the recomputation layer based on the activation value and the gradient.

17. The apparatus according to claim 16, wherein the backward compute unit is specifically configured to execute the backward communication operator during execution of the recomputation layer from which the forward communication operator has been removed.

18. The apparatus according to any one of claims 10 to 17, wherein the recomputation layer comprises a compute module, the forward communication operator, and a post-processing module, and an execution order of the forward communication operator in the recomputation layer is after an execution order of the compute module and before an execution order of the post-processing module; and
the model training apparatus further comprises:
a padding unit, configured to: when a first matrix dimension of output data of the compute module does not match a second matrix dimension of input data of the post-processing module, pad the output data of the compute module based on the second matrix dimension.

19. A distributed training system, wherein the distributed training system comprises a plurality of compute nodes, the plurality of compute nodes are configured to perform distributed training on an artificial intelligence AI model, the AI model comprises a forward communication operator, during a forward computation process, data is transmitted among the plurality of compute nodes by executing the forward communication operator, and each of the plurality of compute nodes is configured to perform steps of the method according to any one of claims 1 to 9.

20. A computer program product comprising instructions, wherein when the computer program product runs on at least one compute device, the at least one compute device is caused to perform the method according to any one of claims 1 to 9.
